# EUROPÄISCHE PATENTANMELDUNG

(11) **EP 0 950 888 A2**
(43) Veröffentlichungstag der Anmeldung: **20.10.1999**
(21) Anmeldenummer: 99105533.6
(22) Anmeldetag: 18.03.1999
(51) Int. Cl.: G01M 11/08

(54) **Verfahren zur Markierung wenigstens eines Punktes auf einem Gegenstand**

(30) Priorität: 17.04.1998 DE 19816992
(71) Anmelder: DaimlerChrysler AG, 70567 Stuttgart (DE)
(72) Erfinder: Beck, Rainer, 72124 Pliezhausen (DE); Blickle, Sven, 71069 Sindelfingen (DE); Ramsperger, Hans, 72108 Rottenburg (DE)

(57) **Zusammenfassung**

Verfahren zur Markierung wenigstens eines Punktes auf einem Gegenstand, insbesondere zur Markierung wenigstens eines Meßpunktes oder einer Fehlerstelle auf einem Kraftfahrzeug oder Kraftfahrzeugbauteilen, wobei der Gegenstand mittels wenigstens einer Projektionseinrichtung derart mit einem Lichtstrahl beleuchtet wird, daß der Auftreffpunkt des Lichtstrahls auf dem Gegenstand den zu markierenden Punkt definiert.

## Beschreibung

Die vorliegende Erfindung betrifft ein Verfahren nach dem Oberbegriff des Patentanspruchs 1.

Bei der Kraftfahrzeugherstellung ist es bisweilen notwendig, bestimmte Stellen auf der Kraftfahrzeugkarosserie oder Bauteilen zu markieren. Hierbei kann es sich um Meßstellen, welche zur Vermessung der Karosserie herangezogen werden, oder auch um Fehlerstellen, welche einer Bedienperson angezeigt werden müssen, handeln.

Herkömmlicherweise werden derartige Stellen mittels farbiger Markierungen, beispielsweise Kreidemarkierungen, oder Eintragungen in sogenannte Fehlerbilder oder Übersichtsprotokolle gekennzeichnet. Bei der Anbringung von Markierungen auf Lackflächen muß zur Vermeidung von Beschädigungen sehr vorsichtig vorgegangen werden, wodurch der Fertigungsaufwand erhöht ist. Kreidemarkierungen sind ferner relativ unbeständig und daher schlecht sichtbar, während bei der Markierung mit stärker anhaftenden Markierungsstoffen darauf geachtet werden muß, daß diese die Lackflächen nicht angreifen bzw. wieder leicht zu entfernen sind. Andererseits muß auch das Eintragen von Meß- oder Fehlerpunkten in Übersichtsprotokolle sehr sorgfältig durchgeführt werden, was ebenfalls zu einem hohen Arbeitsaufwand führt. Die Erstellung von Übersichtsprotokollen führt ferner zu einem nicht unerheblichen Arbeitsaufwand, da die verwendeten Papierblätter geordnet und verwaltet werden müssen.

Aus der DE 34 11 578 A1 ist ein Verfahren zur Ermittlung von Lackfehlern bei Kraftfahrzeugen bekannt, bei dem die Lackoberfläche von einer Leuchtstoffröhre bestrahlt wird, so daß ein Spiegelbild der Leuchtstoffröhre von der Lackoberfläche erzeugt wird. Neben dem Spiegelbild der Leuchtstoffröhre werden die durch den gewählten Strahlengang leuchtenden Lackfehler mit elektrooptischen Mitteln guantitativ erfaßt. Die tatsächliche Auswertung erfolgt mittels CCD-Arrays mit vorgeschalteter Optik und muß als sehr aufwendig angesehen werden. Eine Markierung beliebig ausgebildeter Meßpunkte ist nicht Gegenstand dieser Druckschrift, und mit dem dort beschriebenen Verfahren auch nicht zu erreichen.

Die DE 34 18 317 C1 beschreibt einen Prüfraum zur Überprüfung der Oberfläche von Fahrzeugkarosserien, in dem oberhalb und unterhalb der zu prüfenden Karosserie Leuchtreihen angeordnet sind. Die zu prüfenden Karosserien werden hierbei durch den länglich ausgebildeten Prüfraum geschleppt. Auch dieser Aufbau eignet sich nicht zur Markierung von einzelnen Meßpunkten auf einem Kraftfahrzeug.

Aus der WO 87/00629 ist eine Oberflächenprüfvorrichtung für Lackoberflächen von Kraftfahrzeugen bekannt, welche an der Lackoberfläche reflektiertes Laserlicht auswertet. Eine derartige Auswertung erfordert einen hohen Rechenaufwand. Eine Markierung bestimmter Punkte einer Kraftfahrzeugkarosserie ist nicht Gegenstand dieser Druckschrift.

Schließlich behandelt die DE 37 12 513 C2 ein Verfahren zum Prüfen einer wenigstens matt glänzenden Oberfläche eines Prüflings auf Karosseriefehler, insbesondere zur Überprüfung der Oberfläche einer lackierten Kraftfahrzeugoberfläche auf Lackierungsfehler, und eine Vorrichtung zur Durchführung dieses Verfahrens. Hierbei wird die Karosserie mit diffusem Licht von einer ortsfesten Lichtquelle zur Erzeugung eines Lichtbandes auf ihrer Oberfläche beleuchtet. Ein derartiges Verfahren ist zur Markierung einzelner Punkte auf einem Kraftfahrzeug ungeeignet.

Aufgabe der Erfindung ist daher die Bereitstellung eines Verfahrens, durch welches die Markierung von einzelnen Stellen oder Punkten auf der Oberfläche eines Gegenstandes gegenüber herkömmlichen Verfahren vereinfacht ist.

Diese Aufgabe wird gelöst durch ein Verfahren mit den Merkmalen des Patentanspruchs 1.

Erfindungsgemäß ist nun ein Verfahren zur Verfügung gestellt, welches eine sehr einfache und unaufwendige Markierung beispielsweise von Meßpunkten oder Fehlerstellen auf Kraftfahrzeugen gestattet. Das Verfahren ist materialunabhängig, und es ergeben sich keine Schwierigkeiten in Zusammenhang mit einem Auftragen und eventuellen Entfernen von Markierungsstoffen. Da keine Übersichtsprotokolle geführt werden müssen, ist der Schreib- bzw. Papieraufwand sowie der Bearbeitungsaufwand wesentlich vermindert.

Vorteilhafte Ausgestaltungen des erfindungsgemäßen Verfahrens sind Gegenstand der sich an den Hauptanspruch anschließenden Unteransprüche.

Vorteilhafterweise wird als Projektionseinrichtung ein Laser oder Laserscanner verwendet. Mittels eines Lasers können Punkte auf der Oberfläche in sehr einfacher Weise genau festgelegt werden, so daß beispielsweise Abstände zwischen zwei oder mehreren derartiger Punkte mit großer Präzision bestimmbar sind. Hierdurch sind Fahrzeugkarosserien, beispielsweise bei der Herstellung oder auch nach Unfällen, sehr genau ausmeßbar.

Gemäß einer besonders bevorzugten Ausgestaltung des erfindungsgemäßen Verfahrens wird die Projektionseinrichtung entsprechend einer Bewegung des Gegenstandes, insbesondere eines Transportes eines Fahrzeuges in einer Fertigungsstraße, zur Aufrechterhaltung der Markierung des wenigstens einen Punktes nachgeführt. Die Nachführung kann hierbei beispielsweise mittels einer Schwenkbewegung oder einer Linearbewegung entlang der Fertigungsstraße erfolgen. Durch die direkte, sich mitbewegende Beleuchtung bzw. Markierung der jeweiligen Punkte ist es möglich, die Punkte über eine bestimmte Strecke ergonomisch optimal für eine Bedienperson zu markieren. Die Steuerung der Projektionseinrichtung erfolgt hierbei zweckmäßigerweise über einen Meßsystemrechner.

Vorteilhafterweise werden Informationen, insbesondere betreffend Meßergebnisse oder Fehlerstellen, mittels Projektion unmittelbar auf dem Gegenstand dargestellt. Hierzu bieten sich beispielsweise Symbol- und/oder Farbkodierungen, welche ebenfalls mittels einer Projektionseinrichtung auf den Gegenstand, insbesondere ein Fahrzeug oder ein Fahrzeugbauteil projizierbar sind, an.

Bevorzugte Ausführungsformen des erfindungsgemäßen Verfahrens werden nun anhand der Zeichnung im einzelnen erläutert. In dieser zeigt
- Fig. 1: schematisch eine Anwendung des erfindungsgemäßen Verfahrens am Beispiel eines stationären Kraftfahrzeugs, und
- Fig. 2: schematisch eine Anwendung des erfindungsgemäßen Verfahrens am Beispiel eines auf einem Fertigungsband transportierten Kraftfahrzeugs.

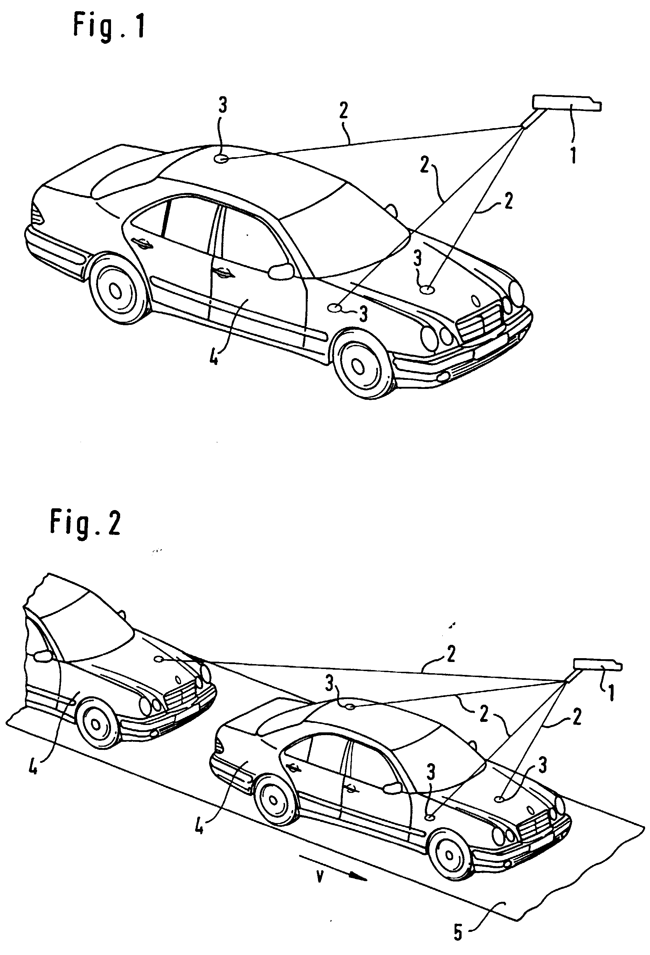

In Fig. 1 ist eine Projektionseinrichtung 1 dargestellt, welche Lichtstrahlen 2 auf ein Fahrzeug 4 projiziert. Als Projektionseinrichtung 1 ist insbesondere ein Laser bzw. Laserscanner bevorzugt, welcher Licht einer geeigneten sichtbaren Wellenlänge abstrahlt.

Mittels der Lichtstrahlen 2 sind auf dem Fahrzeug 4 Meß- bzw. Fehlerstellen 3 eindeutig und für eine Bedienperson gut sichtbar markiert. Beispielsweise mittels Triangulationsverfahren ist es in einfacher Weise möglich, zur Vermessung der Fahrzeugkarosserie Abstände zwischen einzelnen Punkten zu ermitteln. Die Projektionseinrichtung 1 kann derart ausgebildet sein, daß eine Anzahl von Meß- oder Fehlerstellen 3 gleichzeitig beleuchtet wird. Es ist jedoch ebenfalls denkbar, eine aufeinanderfolgende Beleuchtung der Meß- oder Fehlerstellen 3 vorzusehen. Hierzu wird der Projektor in geeigneter Weise beispielsweise rechnergesteuert verschwenkt oder verfahren. Die Festlegung der jeweiligen Stellen 3 kann beispielsweise bildschirmgesteuert erfolgen, indem die zu markierenden Stellen auf einem Bildschirm, auf dem das Fahrzeug 4 oder ein Fahrzeugteil dargestellt ist, mittels einer Maus angefahren werden (Tracking-System). Die hierdurch definierten Koordinaten werden dann auf eine Steuervorrichtung, beispielsweise einen Meßsystemrechner des Projektors 1 gegeben, welcher eine entsprechende Bewegung des Projektors 1 veranlaßt. Auch eine direkte Eingabe von Koordinaten (beispielsweise Drehwinkel und/oder kartesische Koordinaten) zur Steuerung der Projektionseinrichtung 1 ist denkbar. Es ist ferner möglich, mittels desselben oder eines weiteren Projektors 1 zur direkten Darstellung von Meßergebnissen auf dem Fahrzeug 4 Symbol- oder Farbkodieringen bzw. Prinzipbilder auf das Fahrzeug zu projizieren. Die jeweiligen Messungen bzw. Markierungen sind beispielsweise mittels eines (nicht dargestellten) CAD-Systems und/oder Kennummern jeweiliger Bauteile koordinierbar.

Fig. 2 zeigt eine weitere Ausgestaltung des erfindungsgemäßen Verfahrens. Hier ist das zu markierende Fahrzeug 4 auf einem Fertigungsband 5 positioniert, welches eine Fördergeschwindigkeit v aufweist. Die Projektionseinrichtung 1 ist hierbei derart steuerbar bzw. verschwenk- oder verfahrbar, daß die Markierungen der Fehler- oder Meßstellen 3 sich mit dem Fahrzeug 4 mitbewegen.

## Patentansprüche

1. Verfahren zur Markierung wenigstens eines Punktes auf einem Gegenstand, insbesondere zur Markierung wenigstens eines Meßpunktes oder einer Fehlerstelle (3) auf einem Kraftfahrzeug oder Kraftfahrzeugbauteilen (4),
**dadurch gekennzeichnet,**
daß der Gegenstand mittels wenigstens einer als Laser oder Laserscanner ausgebildeten Projektionseinrichtung (1) derart mit einem Lichtstrahl (2) beleuchtet wird, daß der Auftreffpunkt des Lichtstrahls (2) auf dem Gegenstand den zu markierenden Punkt definiert.

2. Verfahren nach Anspruch 1, dadurch gekennzeichnet, daß die Projektionseinrichtung (1) entsprechend einer Bewegung des Gegenstandes, insbesondere eines Transportes eines Kraftfahrzeuges (4) auf einem Fertigungsband (5), zur Aufrechterhaltung der Markierung des wenigstens einen Punktes nachgeführt wird.

3. Verfahren nach einem der vorstehenden Ansprüche, dadurch gekennzeichnet, daß Informationen, insbesondere betreffend Meßergebnisse oder Fehlerstellen, mittels Projektion unmittelbar auf dem Gegenstand dargestellt werden

4. Verfahren nach Anspruch 3, dadurch gekennzeichnet, daß informative Symbole und/oder Farbkodierungen auf dem Gegenstand dargestellt werden.
